# EUROPÄISCHE PATENTSCHRIFT

(11) **EP 1 951 535 B1**
(45) Veröffentlichungstag und Bekanntmachung des Hinweises auf die Patenterteilung: **03.03.2010**
(21) Anmeldenummer: 06776342.5
(22) Anmeldetag: 21.07.2006
(51) Int. Cl.: B60H 1/00, B60S 1/00

(54) **BESCHLAGSENSOR**
CONDENSATION SENSOR
DETECTEUR DE BUEE

(30) Priorität: 21.07.2005 DE 102005033987
(43) Veröffentlichungstag der Anmeldung: 06.08.2008
(73) Patentinhaber: Preh GmbH, 97616 Bad Neustadt a.d. Saale (DE)
(72) Erfinder: SCHMITT, Hans-Michael, 97702 Münnerstadt (DE); POLZER, Thomas, 97616 Bad Neustadt (DE); AFANASJEVAS, Andrej, 97616 Bad-Neustadt (DE)
(74) Vertreter: Bauer, Wulf
(86) Internationale Anmeldenummer: PCT/EP2006/007221
(87) Internationale Veröffentlichungsnummer: WO 2007/009814

(56) Entgegenhaltungen:
- EP-A2- 1 306 276
- EP-A2- 1 359 407
- EP-A2- 1 371 532
- DE-A1- 10 104 942
- DE-A1- 10 152 999
- US-B1- 6 422 062

## Beschreibung

Die Erfindung betrifft eine Sensoranordnung zur Befestigung auf einer Innenseite einer Windschutzscheibe in einem Kraftfahrzeug, bestehend zumindest aus einem die relative Luftfeuchte ermittelnden Sensorelement und einer das Sensorelement elektrisch kontaktierenden Leiterplatte, wobei das Sensorelement auf der Leiterplatte in Richtung der Windschutzscheibe auf der Leiterplatte befestigt ist.

In komfortablen Klimaanlagen in Kraftfahrzeugen besteht neben der Regelung der Innenraumtemperatur die Möglichkeit, ein Beschlagen der Scheiben und insbesondere der Windschutzscheibe zu erkennen und geeignete Gegenmaßnahmen einzuleiten. Dabei kommt es an den Scheiben, wegen der Temperaturdifferenz an der Oberfläche der Scheibe und dem Innenraum, zu Kondensatbildung. Häufig geschieht dies, wenn die Temperaturdifferenz zwischen dem Innenraum des Kraftfahrzeuges und der Umgebungstemperatur sehr groß ist. In Bezug auf die relative Luftfeuchtigkeit im Innenraum kommt es bei diesen großen Temperaturdifferenzen dazu, dass die Taupunkttemperatur an der Innenfläche der Scheiben unterschritten wird, so dass ein Beschlagen der Scheiben auftritt. Zur Erkennung eines beginnenden Beschlags an der Scheibe eines Kraftfahrzeuges sind verschiedene Systeme bekannt geworden.

In der DE 101 52 999 A1 ist ein Sensor zur Detektion einer Beschlagsneigung an einer Scheibe, die insbesondere eine Kraftfahrzeugscheibe ist, beschrieben. Der feuchtesensitive Sensor wird hierbei aus einem kapazitiv arbeitenden Feuchtesensor bestehend aus zwei Elektroden, zwischen denen sich ein feuchteempfindliches Polymerelement befindet gebildet. Die direkte thermische Ankopplung des Sensors an die Scheibe erfolgt hierbei vorzugsweise über eine der Elektroden. Alternativ kann eine Metallplatte verwendet werden, die mit einer der Elektroden thermisch verbunden ist. Die Metallplatte wird hierbei mittels einer dünnen Folie mit thermischer Leitfähigkeit an die Scheiben angeklebt.

Eine weitere Sensoranordnung zur Erfassung des Beschlagens einer Kraftfahrzeugwindschutzscheibe ist in der DE 101 04 942 A1 beschrieben. In einer Ausführungsform wird hierbei das feuchtesensitive Sensorelement auf eine Platine montiert und das Sensorelement unmittelbar mittels einer Wärmeleitschicht auf die Innenseite einer Scheibe aufgeklebt. Wesentlich hierbei ist die Verwendung von Wärmeleitfolien, so dass eine gute thermische Ankopplung des Sensorelementes an die Scheibe erfolgt. Nachteilig ist hierbei zum Beispiel die Verwendung der kostenintensiven klebefähigen Wärmeleitschicht.

Aus der DE 101 04 942 A1 ist eine Sensoranordnung zur Befestigung auf einer Innenseite einer Windschutzscheibe in einem Kraftfahrzeug, bestehend aus mindestens einem die relative Luftfeuchte ermittelnden Sensorelement und einer das Sensorelement elektrisch kontaktierenden Leiterplatte, bekannt, wobei das Sensorelement auf der Leiterplatte in Richtung der Windschutzscheibe auf der Leiterplatte befestigt ist und zumindest zwischen dem Sensorelement und der Windschutzscheibe eine die Scheibenkrümmung aufnehmende Ausgleichsfolie vorhanden ist und die Ausgleichsfolie eine Klebefolie ist.

Aufgabe der Erfindung ist es einen kostengünstigen, klein bauenden Beschlagsensor beziehungsweise eine Sensoranordnung zu entwickeln. Darüber hinaus soll die Sensoranordnung konstruktiv einfach aufgebaut und leicht an vorhandene Applikationen anbindbar sein.

Die Aufgabe der Erfindung wird dadurch gelöst, dass zumindest zwischen dem Sensorelement und der Windschutzscheibe eine die Scheibenkrümmung aufnehmende Ausgleichsfolie vorhanden ist und die Ausgleichsfolie eine Klebefolie ist. Durch den erfindungsgemäßen Aufbau ist nun die Möglichkeit geschaffen einerseits eine gute Anbindung an die Windschutzscheibe zu gewährleisten und durch den simplen Aufbau eine kostengünstige Sensoranordnung bereitzustellen. Durch das unmittelbare Anbinden des Sensorelementes an die Windschutzscheibe wird darüber hinaus eine gute thermische Ankopplung des Sensorelements an die Scheibentemperatur gewährleistet. Durch die unmittelbaren Anbindungen des Sensorelementes an die Windschutzscheibe kann hierbei auf die Folie mit guter thermischer Leitfähigkeit verzichtet werden. Durch den erfindungsgemäßen Einsatz einer Abstandsfolie ist es darüber hinaus möglich, das Sensorelement auf der Leiterplatte zu befestigen und/oder zu kontaktieren, so dass eine optimale Anbindung und eine minimale Temperaturbeeinflussung durch die elektronischen Bauteile auf der Leiterplatte beziehungsweise in der Sensoranordnung gewährleistet ist. Hierbei besitzt die Abstandsfolie eine Öffnung, die größer ist als das Sensorelement, so dass eine Zirkulation der Luft des Innenraums im Bereich des Sensorelementes gewährleistet ist. Dazu ist in der Leiterplatte neben den elektrischen oder mechanischen Befestigungen eine Aussparung in der Leiterplatte enthalten, die beispielsweise in ihren Abmaßen den Abmaßen der Öffnung in der Abstandsfolie entspricht.

In einer weiteren Ausführungsform der Erfindung ist die Abstandsfolie abgewinkelt ausgeführt, wobei die Abstandfolie von der Windschutzscheibe weg, abgewinkelt ist. Dies bietet den Vorteil, dass weitere elektronische Bauteile der Sensoranordnung auf der Abstandsfolie montiert werden können, wodurch die Abmaße der Sensoranordnung verringert werden können. Dies bietet den Vorteil, dass der Sichtbereich in der Windschutzscheibe nur minimal beeinträchtigt wird.

Nachfolgend wird die Erfindung anhand eines Ausführungsbeispiels näher erläutert. Es zeigt:
- Figur 1: die erfindungsgemäße Sensoranordnung in einer dreidimensionalen zusammengebauten Darstellung und
- Figur 2: eine Explosionszeichnung einer erfindungsgemäß aufgebauten Sensoranordnung.

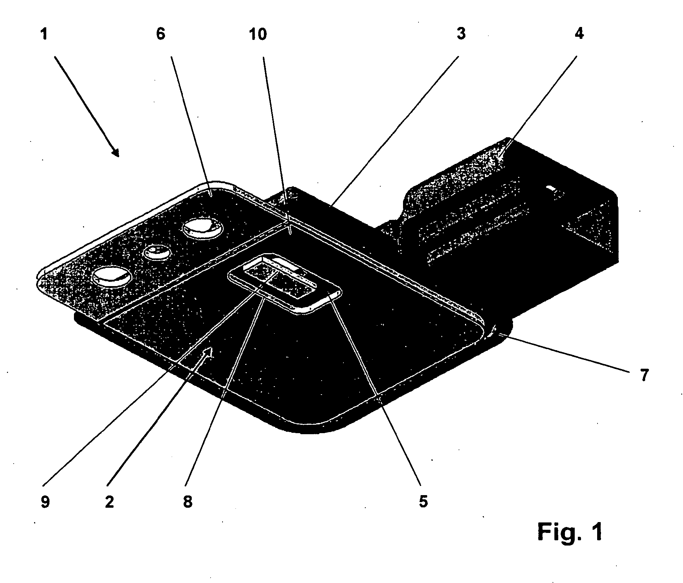

In der Figur 1 ist eine erfindungsgemäße Sensoranordnung 1 in einer dreidimensionalen Ansicht von ihrer Unterseite 2 her dargestellt. Die Unterseite 2 beschreibt hierbei die Seite der Sensoranordnung 1, die auf der Windschutzscheibe befestigt ist. An das Gehäuse 3 ist eine Steckverbindung 4 angeformt. Innerhalb und bündig mit dem Gehäuse 3 ist die Leiterplatte 5 aufgenommen, wobei die Leiterplatte 5 einerseits über die Lötung zu den Steckerkontakten und eine das Gehäuse 3 zumindest teilweise ausfüllende Vergussmasse gehalten ist. In diesem Ausführungsbeispiel geht die Abstandsfolie 6 über den Rand 7 des Gehäuses 3 hinaus, wobei die Abstandsfolie 6 bündig an der Leiterplatte 5 sowie am Rand 7 des Gehäuses 3 anliegt. Die Abstandsfolie 6 besitzt in diesem Ausführungsbeispiel eine im Wesentlichen rechteckige Öffnung 8 in der das Sensorelement 9 mittels der Leiterplatte 5 gehalten ist. Auf der Abstandsfolie 6 ist, in diesem Ausführungsbeispiel, die Abstandsfolie 6 lediglich bereichsweise überdeckend, die Klebefolie 10 aufgebracht. Mittels der Klebefolie 10 wird einerseits die Sensoranordnung 1 an der nicht dargestellten Scheibe befestigt und andererseits dient die Klebefolie 10 zum Ausgleich der Scheibenkrümmung, so dass die Klebefolie 10 besser als Ausgleichsfolie 10 bezeichenbar ist.

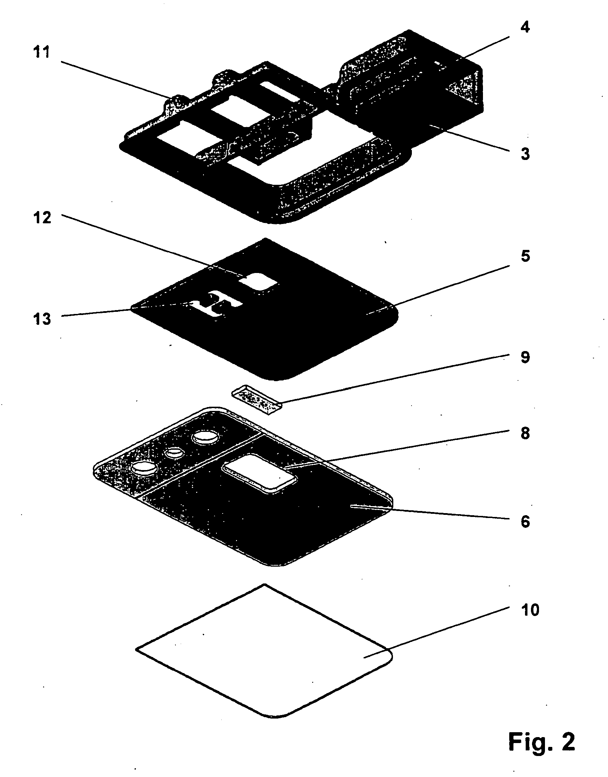

In der Figur 2 ist der schematische Aufbau der wesentlichen Elemente der Erfindung perspektivisch in einer Explosionszeichnung wiedergegeben. Hierbei wurden die identischen Bauteile mit identischen Bezugsziffern versehen.

Das Gehäuse 3 besitzt Rippen 11, die einerseits das Gehäuse 3 verstärken, stützen, stabilisieren und bilden, andererseits ermöglichen die Rippen 11 die ungestörte Luftzirkulation in Richtung des Sensorelements 9. In diesem Ausführungsbeispiel wird das Sensorelement 9 über der Ausnehmung 12 auf der Leiterplatte 5 elektrisch kontaktiert und befestigt. Hierbei liegt das Sensorelement 9 auf der Leiterplatte 5 auf. Um den Abstand zur Windschutzscheibe zu überbrücken, wird die Abstandsfolie 6 zwischen der Leiterplatte 5 und der Ausgleichsfolie 10 eingefügt. Wobei die Abstandsfolie 6 beispielsweise an die Leiterplatte 5 anklebbar ist. Darüber hinaus besteht ebenfalls die Möglichkeit die Abstandfolie 6 form- oder stoffschlüssig am Gehäuse 3 zu befestigen.

In die Leiterplatte 5 ist eine weitere Ausnehmung 13 eingebracht, die ebenfalls elektronische Bauteile aufnimmt. So ist es beispielsweise vorstellbar im Bereich 13 einen Temperatursensor zu positionieren, um einerseits die Temperatur der zirkulierenden Luft zu erfassen und andererseits die Erwärmung durch die elektronischen Bauteile und deren Einfluss auf das Sensorelement 9 auszuwerten und/oder zu kompensieren.

Die Dicke der Ausgleichsfolie 10 beträgt üblicherweise zwischen 0,5 mm und 1 mm, wobei dieser Dickenbereich ausreichend ist, um die Scheibenkrümmung in Bezug auf die eben ausgeführte Sensoranordnung 1 auszugleichen. Die Dicke der Abstandsfolie 6, die auch als Spacerfolie 6 bezeichenbar ist, ist abhängig von der Dicke des feuchtesensitiven Sensorelementes 9 und liegt in einem Bereich von 1 mm bis 3 mm. Die Abstandsfolie 6 oder auch das Abstandskunststoffelement 6 wird bevorzugt aus Polyimid gefertigt. In einem Bereich 14 sind in die Abstandsfolie 6 weitere Durchbrüche 15 als Bohrungen eingebracht, die zur Aufnahme von Bauteilen oder auch zum Positionieren an der Windschutzscheibe dienen. Die Leiterplatte 5 ist als herkömmliche Leiterplatte ausgeführt und trägt die weiteren Bauteile, die für die Funktion der Sensoranordnung 1 oder die Übertragung an ein Bussystem notwendig sind. Über die Buchse 4 sind die Leiterplatte 5 sowie das Sensorelement 9 elektrisch kontaktiert und mit der Bordelektronik des Kraftfahrzeuges und hier insbesondere mit der Regelung der Klimaanlage verbunden. Darüber hinaus sind die elektronischen Bauteile auf der Leiterplatte 5, wie das Sensorelement 9 in der DE 101 52 999, auf die hier ausdrücklich Bezug genommen wird, beschrieben.

Die Abstandsfolie 6 ist gewinkelt ausführbar, wobei die Abwinkelung beispielsweise in das Gehäuse 3 der Sensoranordnung 1 hineinreicht. Hierdurch ist die Möglichkeit geschaffen, elektrische Bauteile auf der Abstandsfolie 6 zu positionieren, so dass die Leiterplatte 5 kleiner dimensionierbar ist, wodurch gleichzeitig die Sensoranordnung 1 leichter, zum Beispiel im Spiegelfuß eines Rückspiegels, integrierbar ist. Die Abstandsfolie 6 ist hierbei beispielsweise um 90 Grad abwinkelbar. Somit ist ein gewinkelter Aufbau einer Sensoranordnung möglich. Dadurch kann die an der Windschutzscheibe benötigte Fläche zur Ankopplung des Sensoranordnung 1 sehr klein gehalten werden.

## Patentansprüche

1. Sensoranordnung zur Befestigung auf einer Innenseite einer Windschutzscheibe in einem Kraftfahrzeug, bestehend aus mindestens einem die relative Luftfeuchte ermittelnden Sensorelement (9) und einer das Sensorelement (9) elektrisch kontaktierenden Leiterplatte (5), wobei das Sensorelement (9) auf der Leiterplatte in Richtung der Windschutzscheibe auf der Leiterplatte (5) befestigt ist, wobei zumindest zwischen dem Sensorelement (9) und der Windschutzscheibe eine die Scheibenkrümmung aufnehmende Ausgleichsfolie (10) vorhanden ist und die Ausgleichsfolie (10) eine Klebefolie (10) ist, **dadurch gekennzeichnet, dass** zwischen der Leiterplatte (5) und der Ausgleichsfolie (10) eine Abstandsfolie (6) vorhanden ist und die Abstandsfolie (6) eine Öffnung (8) aufweist und das Sensorelement (9) durch die Abstandsfolie (6) hindurch an der Ausgleichsfolie (10) anliegt und dass die Abstandsfolie (6) in ihrer Dicke der Dicke des Sensorelementes (9) entspricht und die Öffnung (8) in der Abstandsfolie größer als das Sensorelement (9) ist.

2. Sensoranordnung nach Anspruch 1, **dadurch gekennzeichnet, dass** die Abstandsfolie (6) von der Windschutzscheibe fortweisend abgewinkelt ausgebildet ist.

3. Sensoranordnung nach dem vorhergehenden Anspruch, **dadurch gekennzeichnet, dass** auf dem abgewinkelten Bereich der Abstandsfolie (6) mindestens ein zur Sensoranordnung (1) zugehöriges elektrisches Bauteil befestigt ist.

4. Sensoranordnung nach einem der vorhergehenden Ansprüche, **dadurch gekennzeichnet, dass** die Abstandsfolie (6) aus Kunststoff insbesondere aus Polyimid gebildet ist.

5. Sensoranordnung nach einem der vorhergehenden Ansprüche, **dadurch gekennzeichnet, dass** die Leiterplatte (5) bündig in einem Gehäuse (3) befestigt ist und die Abstandsfolie (6) im Bereich der Leiterplatte (5) oder im Bereich der Leiterplatte (5) und dem Gehäuse (3) anliegt oder im Bereich der Leiterplatte (5) und dem Gehäuse (3) anliegt und über das Gehäuse (3) hinausgeht.

## Claims

1. A sensor array for fastening to an inner side of a windshield in a motor vehicle, consisting of at least one sensor element (9) sensing the relative air humidity and of a printed circuit board (5) electrically contacting said sensor element (9), said sensor element (9) on said printed circuit board being fastened to said printed circuit board (5) in the direction of the windshield, a compensating film (10) conforming to the curvature of the windshield existing at least between said sensor element (9) and said windshield, said compensating film (10) being an adhesive film (10), **characterized in that** a spacer film (6) is interposed between said printed circuit board (5) and said compensating film (10), said spacer film (6) comprising an aperture (8) and said sensor element (9) traversing said spacer film (6) to fit against said compensating film (10) and that the thickness of said spacer film (6) corresponds to the thickness of said sensor element (9) and the aperture (8) in said spacer film being larger than said sensor element (9).

2. The sensor array as set forth in claim 1, **characterized in that** the spacer film (6) is configured to form an angle pointing away from the windshield.

3. The sensor array as set forth in the previous claims, **characterized in that** at least one electrical component belonging to the sensor array (1) is fastened to the angled region of the spacer film (6).

4. The sensor array as set forth in anyone of the previous claims, **characterized in that** the spacer film (6) is made from plastic material, in particular from polyimide.

5. The sensor array as set forth in anyone of the previous claims, **characterized in that** the printed circuit board (5) is fastened in a housing (3), flush therewith, and the spacer film (6) fits in the region of the printed circuit board (5) or in the region of the printed circuit board (5) and in the housing (3) or in the region of the printed circuit board (5) and in the housing (3) and goes beyond said housing (3).

## Revendications

1. Ensemble détecteur destiné à être fixé sur une face intérieure d'un pare-brise dans un véhicule automobile, se composant d'au moins un élément détecteur (9) déterminant l'humidité relative de l'air et d'une carte de circuits imprimés (5) contactant électriquement ledit élément détecteur (9), ledit élément détecteur (9) étant fixé sur ladite carte de circuits imprimés (5) en direction du pare-brise, une feuille de compensation (10) qui compense la courbure de la vitre étant présente au moins entre l'élément détecteur (9) et le pare-brise, et ladite feuille de compensation (10) étant une feuille adhésive (10), **caractérisé par le fait qu'**une feuille d'écartement (6) est présente entre ladite carte de circuits imprimés (5) et ladite feuille de compensation (10) et ladite feuille d'écartement (6) présente une ouverture (8) et que ledit élément détecteur (9), en traversant la feuille d'écartement (6), s'appuie sur la feuille de compensation (10), et que l'épaisseur de ladite feuille d'écartement (6) correspond à l'épaisseur de l'élément détecteur (9) et que l'ouverture (8) pratiquée dans la feuille d'écartement est plus grande que ledit élément détecteur (9).

2. Ensemble détecteur selon la revendication 1, **caractérisé par le fait que** la feuille d'écartement (6) est réalisée de manière à être coudée dans la direction opposée au pare-brise.

3. Ensemble détecteur selon la revendication précédente, **caractérisé par le fait qu'**au moins un composant électrique faisant partie de l'ensemble détecteur (1) est fixé sur la zone coudée de la feuille d'écartement (6).

4. Ensemble détecteur selon l'une quelconque des revendications précédentes, **caractérisé par le fait que** ladite feuille d'écartement (6) est réalisée en matière plastique, en particulier en polyimide.

5. Ensemble détecteur selon l'une quelconque des revendications précédentes, **caractérisé par le fait que** la carte de circuits imprimés (5) est fixée dans un boîtier (3) de manière à être à fleur et que la feuille d'écartement (6) s'appuie au niveau de la carte de circuits imprimés (5) ou au niveau de la carte de circuits imprimés (5) et du boîtier (3) ou s'appuie au niveau de la carte de circuits imprimés (5) et du boîtier (3) et s'étend au-delà du boîtier (3).
